## Europäisches Patentamt

## European Patent Office

## Office européen des brevets

(19)

(11) Veröffentlichungsnummer: **0 108 863**

**B1**

(12)

# EUROPÄISCHE PATENTSCHRIFT

(45) Veröffentlichungstag der Patentschrift:
24.02.88

(21) Anmeldenummer: 83107000.8

(22) Anmeldetag: 16.07.83

(51) Int. Cl.⁴: **B 01 J 2/22**, B 65 B 1/12,
B 65 B 37/10, B 65 G 69/20,
C 09 C 1/30

(54) Verfahren und Vorrichtung zur kontinuierlichen Verdichtung von feinteiligen, pulverförmigen Stoffen.

(30) Priorität: 16.10.82 DE 3238427

(43) Veröffentlichungstag der Anmeldung:
23.05.84 Patentblatt 84/21

(45) Bekanntmachung des Hinweises auf die Patenterteilung:
24.02.88 Patentblatt 88/8

(84) Benannte Vertragsstaaten:
AT BE CH DE FR GB IT LI NL

(56) Entgegenhaltungen:
CH-A-513 033
DE-A-2 906 314
DE-B-1 129 459
DE-B-1 807 714
FR-A-1 513 282
GB-A-1 116 108

(73) Patentinhaber: Degussa Aktiengesellschaft,
Weissfrauenstrasse 9, D-6000 Frankfurt am Main
1 (DE)

(72) Erfinder: Brandt, Bernd, Dr., Höhenring 34, D-5357
Swisttal 1 (DE)
Erfinder: Esch, Heinz, Bonner Strasse 425, D-5047
Wesseling (DE)
Erfinder: Kreher, Alfons, Dr., Am Kappelgarten 19,
D-6000 Frankfurt am Main (DE)
Erfinder: Nagel, Werner, Dr., Welzheimer Strasse
2, D-8757 Karlstein (DE)

EP 0 108 863 B1

## 0 108 863

**Beschreibung**

Die Erfindung betrifft ein Verfahren und eine Vorrichtung zum kontinuierlichen Verdichten von feinteiligen pulverförmigen Stoffen, wie z. B. Kieselsäuren und Silikaten.

Es ist bekannt, pulverförmige Stoffe zu verdichten, indem man Unterdruck und mechanischen Druck an rotierenden gasdurchlässigen Flächen anwendet. Dabei bewegt sich die gesamte Filterfläche, die nicht der mechanischen Verdichtung dient oder mit mechanisch verdichtetem Material bedeckt ist, in dem zu verdichtendem Material und fördert das Material zur Verdichtungsstelle.

Das verdichtete Material wird mittels Abstreifvorrichtungen von den Walzen abgenommen und fällt nach unten zur Verpackung ab (DE-B-11 29 459)

Aus der DE-A 29 06 314 ist eine Vorrichtung bekannt, mit der pulverförmige Substanzen mit einer senkrecht stehenden zylindrischen Doppelmantelkammer verdichtet und dosiert abgefüllt werden können.

Es ist weiterhin bekannt, pulverförmige Stoffe mit Hilfe einer entlüftbaren Schnecke, welche mit Sintermetall oder Filtertuch bespannt ist, zu entlüften. Diese Vorrichtungen sind als sogenannte Gerivac-Verdichter im Handel.

Die bekannten Verfahren weisen den Nachteil auf, daß eine sehr starke Verdichtung notwendig ist, um den Verlust an Verdichtung durch die Auflockerung des Produktes auf dem Weg von der Verdichtungsvorrichtung bis zur Abpackmaschine auszugleichen.

Zur Erzielung eines bestimmten Verdichtungsgrades in der Verpackung ist es also notwendig, an der Verdichtungsvorrichtung eine wesentlich höhere Verdichtung einzustellen.

Dabei ist die Gefahr gegeben, daß aufgrund der hohen Verdichtung die anwendungstechnischen Eigenschäften des pulverförmigen Stoffes, wie z. B. bei feinteiligen Kieselsäuren, verlorengehen.

Es stellte sich somit die Aufgabe, ein Verfahren zu entwickeln, mittels dem pulverförmige Stoffe, insbesondere feinteilige Kieselsäure, die auf pyrogenem Wege oder durch Fällung hergestellt wurde, kontinuierlich verdichtet werden können, wobei der in der Verdichtungsvorrichtung erzielte Verdichtungsgrad des verdichteten Produktes bis zum Verlassen der Abpackvorrichtung erhalten bleibt.

Gegenstand der Erfindung ist ein Verfahren zur kontinuierlichen Verdichtung von gefällten Silikaten, Alumosilikaten und feinteiligen Kieselsäuren, die auf dem Fällungswege oder pyrogen hergestellt wurden, und direkten Abpackung mittels eines Schneckenpackers, welches dadurch gekennzeichnet ist, daß man die gefällten Silikate, Alumosilikate und feinteiligen Kieselsäuren in einer Verdichtungsvorrichtung,

bestehend aus zwei parallel in einem Gehäuse angeordneten, mit einer Saugvorrichtung in Verbindung stehenden Filterwalzen, mit denen eine Abstreifvorrichtung und eine als Austragsschnecke ausgebildete Austragsvorrichtung derart verbunden sind, daß das Austragsschneckengehäuse die Abstreifvorrichtung ist, oder

bestehend aus einer mit einer Saugleitung verbundenen Förderschnecke, die mit einer als Austragsschnecke ausgebildeten Austragsvorrichtung verbunden ist, wobei die Entlüfterschnecke im 90°-Winkel zur Austragsschnecke angeordnet ist,

verdichtet und unmittelbar nach der Verdichtung aus der Verdichtungsvorrichtung mittels der Austragsvorrichtung austrägt.

Ein weiterer Gegenstand der Erfindung ist eine Vorrichtung zum kontinuierlichen Verdichten von gefällten Silikaten, Alumosilikaten und feinteiligen Kieselsäuren nach dem Verfahren gemäß Anspruch 1, welche dadurch gekennzeichnet ist, daß die Verdichtungsvorrichtung aus zwei parallel in einem Gehäuse angeordneten, mit einer Saugvorrichtung in Verbindung stehenden Filterwalzen besteht, mit denen eine Abstreifvorrichtung und eine als Austragsschnecke ausgebildete Austragsvorrichtung derart verbunden sind, daß das Austragsschneckengehäuse die Abstreifvorrichtung ist.

Die Filterwalzen können mit Tuch bespannt sein. Vorzugsweise werden Sintermetallwalzen, wie sie beispielsweise in der DE-C-18 07 714, Figur 2 beschrieben sind, verwendet. Die Walzen können isodynamisch, wie beispielsweise in der DE-C-18 07 714 beschrieben, gelagert sein.

Die Austragsschnecke kann vorzugsweise parallel zu den beiden Filterwalzen angeordnet sein.

Bei der Verwendung von Filterwalzen kann der Grad der wirksamen Entlüftung über die Breite des Spaltes reguliert werden. So kann bei einem lockeren Stoff die Verdichtung mittels eines engen Spaltes und bei einem dichteren Stoff mittels eines weiten Spaltes erfolgen.

Bei dem erfindungsgemäßen Verfahren kann beispielsweise eine Vorrichtung verwendet werden, wie sie in der DE-C-11 29 458 beschrieben wird. Dazu ist es jedoch notwendig, diese Vorrichtung mit einer Austragsschnecke zu versehen.

Ein weiterer Gegenstand der Erfindung ist eine Vorrichtung zum kontinuierlichen Verdichten von gefällten Silikaten, Alumosilikaten und feinteiligen Kieselsäuren nach dem Verfahren gemäß Anspruch 1, welche dadurch gekennzeichnet ist, daß die Verdichtungsvorrichtung eine mit einer Saugleitung verbundene Förderschnecke ist und mit einer als Schnecke ausgebildeten Austragsvorrichtung verbunden ist, wobei die Entlüfterschnecke im 90°-Winkel zur Austragsschnecke angeordnet ist.

Dabei kann die Entlüfterschnecke sowohl vertikal als auch horizontal angeordnet sein. Die Austragsschnecke und Entlüfterschnecke sind im kleinstmöglichen Abstand zueinander angeordnet. Die Austragsschnecke unterliegt einer Zwangsförderung durch die Entlüfterschnecke, so daß eine Wiederbelüftung vermieden wird.

Aufgrund des erfindungsgemäßen Verfahrens ist es möglich, den pulverförmigen Stoff, wie z. B. gefällte Silikate, Alumosilikate und insbesondere feinteilige Kieselsäuren, die auf dem Fällungswege oder pyrogen

2

hergestellt wurden, direkt mittels eines Schneckenpackers abzupacken. Der pulverförmige Stoff behält die einmal erreichte Verdichtung und wird nicht wieder belüftet. Der pulverförmige Stoff behält seine Pulverform und weist keine Granulate oder Knötchen auf.

Dies bedeutet, daß beispielsweise die erfindungsgemäß verdichtete, feinteilige Kieselsäure ihre anwendungstechnischen Eigenschaften behält, obwohl sie eine höhere Verdichtung als eine gemäß dem Stand der Technik verdichtete Kieselsäure aufweist.

Weiterhin ist die Abpackleistung der erfindungsgemäßen Vorrichtung wesentlich höher (bis zu 100 %) als die eines bekannten Schneckenpackers.

**Beispiel**

Der Schneckenpacker mit integriertem Walzenentlüfter, wie er in diesem Beispiel verwendet wird, besitzt folgende technischen Daten:

| | |
|---|---|
| Durchmesser der Entlüfterwalzen | 210 mm |
| Länge der Entlüfterwalzen | 300 mm |
| Undrehungsgeschwindigkeit | 18 Upm |
| Spaltbreite | 20 mm |
| Vakuum | 0,2 -0,8 bar |
| Drehzahl der Austragsschnecke | 800 Upm |

Sowohl beide Entlüfterwalzen als auch die Austragsschnecke haben getrennte Antriebe. Die Vakuumsteuerung an beiden Sintermetall-Walzen ist mit dem Füllvorgang gekoppelt.

Der Abstand "Walzenentlüfter - Schnecke - Abstreifer" ist so gewählt, daß das zu verdichtende Produkt einer Zwangszuführung zur Austragsschnecke unterliegt.

Mit der vorstehend beschriebenen Vorrichtung mit integriertem Walzenentlüfter wurden verschiedene Kieselsäuren und Silikate verdichtet, d. h. es wurde ihnen die anhaftende Luft entzogen. Dabei gelang es, die Sackgewichte beträchtlich zu erhöhen, in mehreren Fällen sogar zu verdoppeln.

Beachtlich ist, daß selbst sprühgetrocknete Produkte ohne nennenswerte Schädigung mit der erfindungsgemässen Vorrichtung verdichtet werden können. Ebenso bemerkenswert ist, daß es die erfindungsgemässe Vorrichtung erlaubt, auch in luftundurchlässige Säcke (ungenagelte PE-Verpackung) abzufüllen.

Die Ergebnisse der erfindungsgemäß vorgenommenen Verdichtung sind in der Tabelle 1 zusammengefaßt.

Bei den gleichen Produkten wurde ebenfalls eine Verdichtung gemäß dem Verfahren nach der DE-B-11 29 459 durchgeführt. Dabei zeigt sich, daß bei den Produkten der Beispiele 1, 2, 3, 5, 6 und 11 eine Verdichtung in demselben Verhältnis nicht möglich war, weil dann eine unerwünschte Knötchenbildung auftrat. Bei den Produkten der anderen Beispiele ist zwar eine Verdichtung möglich, jedoch kann erfindungsgemäß eine höhere Verdichtung erzielt werden, ohne daß dabei eine Produktschädigung auftritt.

Der Vorteil läßt sich daraus erkennen, daß entweder in dieselbe Verpackung eine deutlich größere Menge oder dieselbe Menge in eine deutlich kleinere Verpackung eingebracht werden kann.

**Tabelle 1**

| Nr. | Produkt | Sackgröße / Sackart | Sackgewicht (kg) bisher | neu | Steigerung des Sackgewichtes (%) |
|---|---|---|---|---|---|
| 1 | FK 500-LS Fällungskieselsäure | 60x100x13 PE-Sack ohne Nagelung | 5 | 10 | 100 |
| 2 | FK 310 Fällungskieselsäure | 60x100x13 PE-Sack ohne Nagelung | 10 | 20 | 100 |
| 3 | FK 160 Fällungskieselsäure | 65x100x13 PE-Außenlage mit Nagelung | 7,5 | 15 | 50 |
| 4 | FK 320 DS Fällungskieselsäure | Papier | 15 70x120x13 | 15 65x100x13 | 30 |
| 5 | FK 300DS Fällungskieselsäure | 63,5x98x13 Papier | 10 | 15-20 | 100 |
| 6 | Wessalon S Kieselsäure | 70x92x14 Papier | 20 | 25 | 25 |
| 7 | P 820 Aluminiumsilikat | 70x100x13 | 25 | 30 | 20 |
| 8 | Wessalon Kieselsäure | 70x100x13 | 25 | 35 | 40 |
| 9 | VN3-ZF Fällungskieselsäure | 70x100x13 Papier | 25 | 30 | |
| 10 | D 17 Kieselsäure | 60x98x13 Papier | 10 | 20 | 33 |
| 11 | D 10 Kieselsäure | 60x95x125 | 10 | 15 | 50 |
| 12 | Calsil Calciumsilikat | 65x100x13 | 25 | 35-39 | > 40 |
| 13 | FK 322 Kieselsäure | 70x100x13 | 25 | 35 | 40 |
| 14 | HAB A 40 Zeolith A | 50x81x13 | 25 | 35 | 40 |
| 15 | R 972 Kieselsäure | | | | 70 |
| 16 | Aerosil 200 Kieselsäure | | | | $\geqslant$ 100 |

Die erfindungsgemäße Vorrichtung wird an Hand der Zeichnung näher erläutert.

Es zeigen

Figur 1 die schematische Darstellung der Vorrichtung mit einer Verdichtungsvorrichtung in Form zweier Filterwalzen

Figur 2 eine schematische Darstellung der Vorrichtung mit einer Verdichtungsvorrichtung in Form einer Förderschnecke.

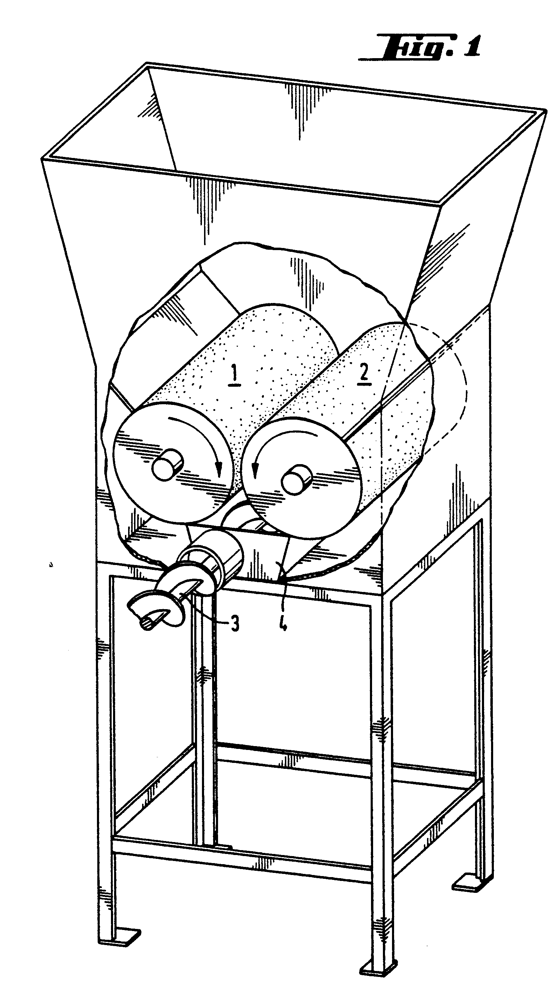

Gemäß Figur 1 sind die beiden Entlüftungswalzen 1 und 2 gemäß DE-C-11 29 459 parallel zueinander angeordnet. Zwischen den Entlüftungswalzen 1 und 2 ist die Austragsschnecke 3, deren Gehäuse 4 als Abstreifvorrichtung ausgebildet ist, angeordnet.

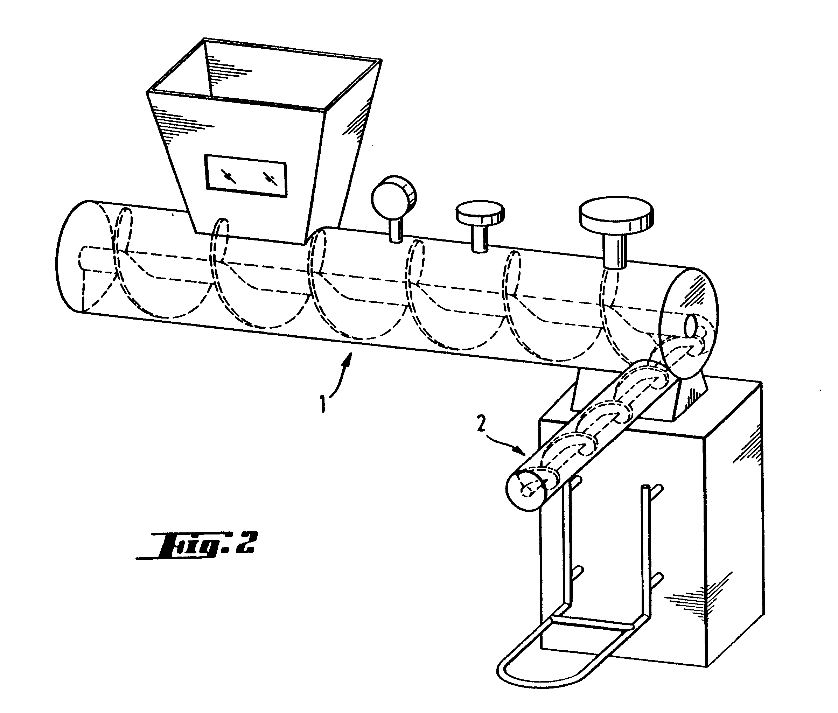

Gemäß Figur 2 ist die Entlüfterschnecke 1 mit der Austragsvorrichtung die als Schneckenpacker 2 ausgebildet ist, im rechten Winkel verbunden.

**Patentansprüche**

1. Verfahren zur kontinuierlichen Verdichtung von gefällten Silikaten, Alumosilikaten und feinteiligen Kieselsäuren, die auf dem Fällungswege oder pyrogen hergestellt wurden, und direkten Abpackung mittels eines Schneckenpackers, dadurch gekennzeichnet, daß man die gefällten Silikate, Alumosilikate und feinteiligen Kieselsäuren in einer Verdichtungsvorrichtung,

bestehend aus zwei parallel in einem Gehäuse angeordneten, mit einer Saugvorrichtung in Verbindung stehenden Filterwalzen, mit denen eine Abstreifvorrichtung und eine als Austragsschnecke ausgebildete Austragsvorrichtung derart verbunden sind, daß das Austragsschneckengehäuse die Abstreifvorrichtung ist, oder

bestehend aus einer mit einer Saugleitung verbundenen Förderschnecke, die mit einer als Austragsschnecke ausgebildeten Austragsvorrichtung verbunden ist, wobei die Entlüfterschnecke im 90°-Winkel zur

4

Austragsschnecke angeordnet ist, verdichtet und unmittelbar nach der Verdichtung aus der Verdichtungsvorrichtung mittels der Austragsvorrichtung austrägt.

2. Vorrichtung zum kontinuierlichen Verdichten von gefällten Silikaten, Alumosilikaten und feinteiligen Kieselsäuren nach dem Verfahren gemäß Anspruch 1, dadurch gekennzeichnet, daß die Verdichtungsvorrichtung aus zwei parallel in einem Gehäuse angeordneten, mit einer Saugvorrichtung in Verbindung stehenden Filterwalzen besteht, mit denen eine Abstreifvorrichtung und eine als Austragsschnecke ausgebildete Austragsvorrichtung derart verbunden sind, daß das Austragsschneckengehäuse die Abstreifvorrichtung ist.

3. Vorrichtung zum kontinuierlichen Verdichten von gefällten Silikaten, Alumosilikaten und feinteiligen Kieselsäuren nach dem Verfahren gemäß Anspruch 1, dadurch gekennzeichnet, daß die Verdichtungsvorrichtung eine mit einer Saugleitung verbundene Förderschnecke ist und mit einer als Schnecke ausgebildeten Austragsvorrichtung verbunden ist, wobei die Entlüfterschnecke im 90°-Winkel zur Austragsschnecke angeordnet ist.


## Claims

1. A process for the continuous compaction of precipitated silicates, alumosilicates end finely divided silicas prepared by precipitation or pyrogenically, and direct packing using a screw-type packer, characterised in that the precipitated silicates, alumosilicates and finely divided silicas are compacted in a compacting device consisting of two filter rollers which are arranged in parallel in a housing and communicate with a suction device, to which a stripping device and a discharge device designed as a discharge screw are connected in such a way that the discharge screw housing is the stripping device, or consisting of a conveying screw which is connected to a suction line and is connected to a discharge device designed as discharge screw, wherein the venting screw is arranged at an angle of 90° to the discharge screw, and are discharged from the compaction device by means of the discharge device immediately after compaction.

2. An apparatus for the continuous compaction of precipitated silicates, alumosilicates and finely divided silicas by the process according to Claim 1, characterised in that the compaction device consists of two filter rollers, which are arranged in parallel in a housing and communicate with a suction device, to which a stripping device and a discharge device designed as a discharge screw are connected in such a way that the discharge screw housing is the stripping device.

3. An apparatus for the continuous compaction of precipitated silicates, alumosilicates and finely divided silicas by the process according to Claim 1, characterised in that the compaction device is a conveying screw connected to a suction line and is connected to a discharge device designed as a screw, wherein the venting screw is arranged at an angle of 90° to the discharge screw.


## Revendications

1. Procédé pour la densification en continu de silicates, aluminosilicates et acides siliciques finement divisés, amenés par chute, qui ont été préparés par pyrogénation ou précipitation, et le conditionnement direct au moyen d'un dispositif de remplissage à vis, lequel procédé est caractérisé en ce que l'on effectue la densification des silicates, aluminosilicates et acides siliciques finement divisés, amenés par chute, dans un dispositif de densification composé de deux cylindres filtrants disposés parallèlement dans un carter, reliés à un dispositif d'aspiration, auxquels sont reliés un dispositif de raclage et un dispositif d'extraction ayant la configuration d'une vis d'extraction, de sorte que le carter de la vis d'extraction consiste en le dispositif de raclage, ou composé d'une vis d'alimentation, reliée à un conduit d'aspiration, qui est reliée à un dispositif d'extraction ayant la configuration d'une vis d'extraction, la vis de désaération étant disposée à un angle de 90° par rapport à la vis d'extraction, et on les extrait hors du dispositif de densification, directement après la densification, au moyen du dispositif d'extraction.

2. Dispositif pour la densification en continu, par le procédé selon la revendication 1, de silicates, aluminosilicates et acides siliciques finement divisés, amenés par chute, lequel est caractérisé en ce que le dispositif de densification consiste en deux cylindres filtrants disposés parallèlement dans un carter, reliés à un dispositif d'aspiration, auxquels sont reliés un dispositif de raclage et un dispositif d'extraction ayant la configuration d'une vis d'extraction, de sorte que le carter de la vis d'extraction est constitué par le dispositif de raclage.

3. Dispositif pour la densification en continu, par le procédé selon la revendication 1, de silicates, aluminosilicates et acides siliciques finement divisés, amenés par chute, lequel est caractérisé en ce que le dispositif de densification est une vis d'alimentation reliée à un conduit d'aspiration et est relié à un dispositif d'extraction ayant la forme d'une vis, la vis de désaération étant disposée à un angle de 90° par rapport à la vis d'extraction.

Fig. 1

Fig. 2